# EUROPÄISCHE PATENTSCHRIFT

(11) **EP 0 744 266 B1**
(45) Veröffentlichungstag und Bekanntmachung des Hinweises auf die Patenterteilung: **30.10.2002**
(21) Anmeldenummer: 96107695.7
(22) Anmeldetag: 14.05.1996
(51) Int. Cl.: B29C 45/17

(54) **Verfahren und Vorrichtung zum Spritzgiessen hohlgeblasener Kunststoffkörper**
Method and apparatus for injection moulding hollow blown plastic bodies
Procédé et dispositif pour mouler par injection des corps creux soufflés en matière plastique

(30) Priorität: 23.05.1995 DE 19518963
(43) Veröffentlichungstag der Anmeldung: 27.11.1996
(73) Patentinhaber: ELDRA KUNSTSTOFFTECHNIK GMBH, D-84137 Vilsbiburg (DE)
(72) Erfinder: Gotterbauer, Klaus, 81186 Vilsheim / Langenvils (DE)
(74) Vertreter: Kohlmann, Karl Friedrich, Dipl.-Ing.

(56) Entgegenhaltungen:
- EP-A- 0 043 174
- EP-A- 0 630 731
- WO-A-94/08773
- DE-A- 3 913 109
- FR-A- 2 115 488
- US-A- 5 204 050
- KUNSTSTOFFE, Bd. 83, Nr. 7, Juli 1993, MUNCHEN, Seiten 505-517, XP000372679 P.EYERER ET AL: "spritzgiessen mit gasinnendruck"

## Beschreibung

Die Erfindung betrifft ein Verfahren und eine Vorrichtung zum Spritzgießen hohlgeblasener Kunststoffkörper, bei dem die an sich bekannte Gasinnendrucktechnik verwendet wird.

Unter einem Gasinnendruckverfahren (GID-Verfahren) wird ein Verfahren verstanden, bei dem ein Gas, meistens Stickstoff, in einen mit Kunststoffschmelze gefüllten Formhohlraum injiziert wird und Schmelze durch den Gasdruck von ca. 25 bis 300 bar unter Bildung eines Gaskanals verdrängt wird. Gemäß der Veröffentlichung "Spritzgießen mit Gasinnendruck", P. Eyerer, R. Märtins, Stuttgart und E. Bürkle, München, Zeitschrift "Kunststoffe", Carl Hansa Verlag, München 1993, wird zwischen einem Standard-Gasinnendruck-Verfahren und' einem Gasinnendruck-Sonderverfahren unterschieden.

Beim sog. Standard-Gasinnendruck-Verfahren erfolgt zunächst eine Teilfüllung einer Kavität, das heißt eines Formhohlraumes, mit Kunststoffschmelze. Für die Restfüllung wird Gas eingeleitet. Das bedeutet, daß zuerst die Kavität mit einer genau definierten Menge Kunststoffschmelze teilgefüllt wird. Das dazu nötige Volumen muß vorab empirisch ermittelt werden, um einerseits ein Durchblasen der Fließfront durch das Gas zu vermeiden und andererseits ein ideales Gasblasvolumen sicherzustellen. Gleichzeitig oder nachfolgend wird Gas in das Innere des Formteiles (plastische Seele) eingeleitet, wobei es über ein Anguß- und ein Verteilersystem (mit Maschinendüse) oder im Werkzeug mit Hilfe von Werkzeugdüsen zugeführt wird. Das Gas verdrängt dabei die Schmelze aus der plastischen Seele zum Fließwegende, bis der Rest der Kavität vollständig gefüllt ist. Zu welchem Zeitpunkt das Gas tatsächlich das plastische Material im Formteilinneren verdrängen kann, hängt von physikalischen Vorgängen in der Düse und im Formteil ab.

Nach dem Verdrängungsprozeß wirkt der Gasdruck im gebildeten Hohlraum des Formteiles als sog. Nachdruck zum Schwindungsausgleich, bis das Formteil so weit abgekühlt ist, daß es entformt werden kann.

Vor der Entformung ist es allerdings notwendig, den Gasdruck im Formteilinneren abzubauen, da sonst beim öffnen des Werkzeuges der Hohlkörper aufplatzt. Dies kann durch geeignete Gasrückführung und/oder Druckentlastung in die Umgebung erfolgen.

Beim GID-Sonderverfahren wird im Gegensatz zum Standard-Gasinnendruck-Verfahren die Kavität vollständig mit Schmelze gefüllt. Dann erfolgt das sogenannte Masserückdrücken. Unter Masserückdrücken versteht man das Zurückschieben der plastischen Seele der Schmelze aus dem Formteil über die sogenannten Verdrängerdüsen in die Plastifiziereinheit der Spritzmaschine mit Hilfe von Gasdruck. Abhängig von der Formteilgeometrie wirkt dabei der Massenachdruck zum Schwindungsausgleich der verbliebenen dünnen Wandstärke. Die Position der Schnecke der Plastifiziereinheit nach dem Zurückschieben ist ein Maß für die Lange des Gaskanales. Nach dem Zurückschieben der Schmelze und dem Verschließen der Verdrängerdüse wird der Gasdruck zum Schwindungsausgleich und zur intensiven Kühlung zwischen Formteiloberflache and Werkzeugwand angehoben. Anschließend muss ähnlich dem Standard-Gasinnendruck-Verfahren eine Gasruckführung bzw. Druckentlastung durchgeführt werden, um das Formteil entformen zu können.

Bisher konnten diese Gasinnendruckverfahren nur bei einfachen Formteilgeometrien angewendet werden. Bei komplizierteren Formteilgeometrien musste bisher das beim Verdrängen der schmelzflüssigen Seele in einen Formhohlraum ausgetriebene Material in eine oder mehrere, im Werkzeug vorgesehene, im Formteil entformbare Nebenkavitäten eingeleitet werden.

Ein Verfahren and eine Vorrichtung zum Spritzgie8en fluidgefüllter Kunststoffkörper, bei dem die schmelzflüssige Seele in eine Nebenkavität ausgetrieben wird, ist aus der DE 39 13 109 C2 bekannt. Bei diesem bekannten Verfahren wird der Formhohlraum zunächst vollständig mit Kunststoffschmelze ausgefüllt. Nach dem Einsetzen des Erstarrens der Kunststoffschmelze an den Wänden des Formhohlraums wird die noch schmelzflüssige Seele des Kunststoffkörpers mittels eines Fluids in mindestens eine außerhalb des Formhohlraums angeordnete and mit diesem verbundene entformbare Nebenkavität ausgetrieben.

Bei diesem bekannten Verfahren ist es normalerweise notwendig, die Nebenkavität mit einem Schieber zu verschließen, die dann vor der Gaseinleitung and Verdrängung der Schmelze, z.B. pneumatisch oder hydraulisch, geöffnet wird.

Aus der WO 94/08773 ist eine Vorrichtung und ein Verfahren zum Erzeugen von Hohlkörpern unter Anwendung des Standard-Gasinnendruck-Verfahrens bekannt. Dabei erfolgt zunächst eine Teilfüllung einer Kavität, d. h. eines Formhohlraums, mit Kunststoffschmelze. Anschließend wird ein Gas eingeleitet, um den Hohlkörper zu formen. Die Kavität wird mit einer genau definierten Menge Kunststoffschmelze gefüllt. Das anschließend eingeleitete Gas verdrängt die Schmelze aus der plastischen Seele zum Gießwegende hin, bis der Rest der Kavität vollständig gefüllt ist. Durch Einführen eines Druckmediums mit höherem bzw. erhöhtem Druckniveau vom Fließwegende her und im Wesentlichen entgegengesetzt zur Fließrichtung der Kunststoffschmelze werden ein oder mehrere zweite Medienblasen mit einer bereits bestehenden ersten Mediumblase vereinigt.

Das der Erfindung zugrundeliegende technische Problem besteht darin, eine Verfahrensweise and eine Vorrichtung zu schaffen, bei der auch bei komplizierteren Formteilgeometrien mit beispielsweise Querverbindungen keine oder zumindest weniger Nebenkavitäten erforderlich sind als bisher.

Dieses technische Problem wird durch ein Verfahren zum Spritzgießen hohlgeblasener Kunststoffkörper mit den Merkmalen des Anspruchs 1 und eine Vorrichtung mit den Merkmalen des Anspruchs 5 gelöst.

Der Erfindung liegt der Gedanke zugrunde, die schmelzflüssige Seele aus einem mit dem Hauptformhohlraum verbundenen Nebenformhohlraum dann mittels eines Fluids auszutreiben, wenn die Fließfront im Hauptformhohlraum die Verbindungsstelle zum Nebenformhohlraum erreicht hat. Durch das erfindungsgemäße Verfahren kann erstmals für einen derartigen Nebenformhohlraum auf eine entformbare Nebenkavität vollständig verzichtet oder bei komplizierten Geometrien zumindest die Anzahl der Nebenkavitäten erheblich verringert werden, indem das Material der schmelzflüssigen Seele des Nebenformhohlraums zusammen mit der schmelzflüssigen Seele des Hauptformhohlraums ausgetrieben wird. Durch die zeitliche Aufeinanderfolge des Betreibens der Düsen zum Einbringen eines Fluids in die Nebenformhohlräume erübrigen oder vermindern sich die Nebenkavitäten für die Nebenformhohlräume und die dazugehörigen Verschlußmechaniken. Darüberhinaus kann ein kleineres und kostengünstigeres Werkzeug als bisher geschaffen werden.

Außerdem ist erstmals keine oder nur eine geringe Nacharbeit bei einem Formteil mit einer komplizierteren Geometrie notwendig, die zum Entfernen einer Nebenkavität bzw. deren Ansatzstück notwendig wäre.

Mit dem erfindungsgemäßen Verfahren können somit erstmals auch kompliziertere Formteilgeometrien mit sich von einem Hauptformhohlraum aus erstreckenden Nebenformhohlräumen unter Einsatz von Gasinnendrucktechnik wirtschaftlich gespritzt werden.

Zusätzlich ist eine Gaseinsparung durch Volumenverringerung sowie eine Materialeinsparung möglich, da das gesamte oder zumindest die überwiegende Menge des verdrängten Materials der schmelzflüssigen Seele aus dem Haupt- und dem Nebenformhohlraum zurück in die Plastifiziereinheit der Spritzgußmaschine gedrückt werden kann.

Schließlich können für derartige komplizierte Formteilgeometrien kürzere Taktzeiten als bisher erreicht werden.

Erfindungsgemäß ist es vorgesehen, in einem ersten Verfahrenschritt zuerst den gesamten Formhohlraum, d.h. den Haupformhohlraum und die damit verbundenen Nebenformhohlräume mit fließfähiger Kunststoffschmelze zu füllen und dann in einem zweiten Verfahrensschritt das druckbeaufschlagte Fluid entsprechend der Lehre nach Patentanspruch 1 oder 2 einzuspeisen.

Grundsätzlich werden die Düsen zum Einspeisen der fließfähigen Kunststoffschmelze und zum Einpressen des druckbeaufschlagten Fluids jeweils derart angeordnet, daß sich ein der jeweiligen Geometrie angepaßter, gleichmäßig fließender Ablauf des Verfahrens realisieren läßt. Für bestimmte Geometrien kann es dabei vorteilhaft sein, die Düsen zum Einspeisen der fließfähigen Kunststoffschmelze an einem Ende des Werkzeuges und die Düsen zum Einpressen des druckbeaufschlagten Fluids am anderen Ende des Werkzeuges anzuordnen.

Da das Werkzeug mehrere, sich in einer Längsrichtung erstreckende Hauptformhohlräume und hierzu in einem Winkel angeordnete Nebenformhohlräume aufweist, so ist es gegebenenfalls vorteilhaft, daß im mittleren Bereich der Nebenformhohlräume Trennbleche angeordnet sind, die die Nebenformhohlräume unterteilen. Dadurch kann die schmelzflüssige Seele aus den Nebenformhohlräumen jeweils gezielt in einen zugeordneten Hauptformhohlraum verdrängt werden.

In solchen Fällen ist es vorteilhaft, daß auf jeder Seite des oder der Trennbleche eine Düse zum Einbringen eines druckbeaufschlagten Fluids angeordnet ist.

Im folgenden ist zur weiteren Erläuterung und zum besseren Verständnis der Erfindung ein Ausführungsbeispiel unter Bezugnahme auf die beigefügten Zeichnungen näher beschrieben und erläutert. Es zeigt:
- Fig. 1: eine schematische Schnittansicht durch ein Spritzgußwerkzeug mit Haupt- und Nebenformhohlräumen während eines ersten Verfahrensschritts,
- Fig. 2: eine schematische Ansicht nach der Fig. 1 während eines zweiten Verfahrensschritts,
- Fig. 3: eine schematische Ansicht nach der Fig. 1 während eines dritten Verfahrensschritts,
- Fig. 4: eine schematische Ansicht nach der Fig. 1 während eines vierten Verfahrensschritts,
- Fig. 5: eine schematische Ansicht nach der Fig. 1 während eines fünften Verfahrensschritts, und

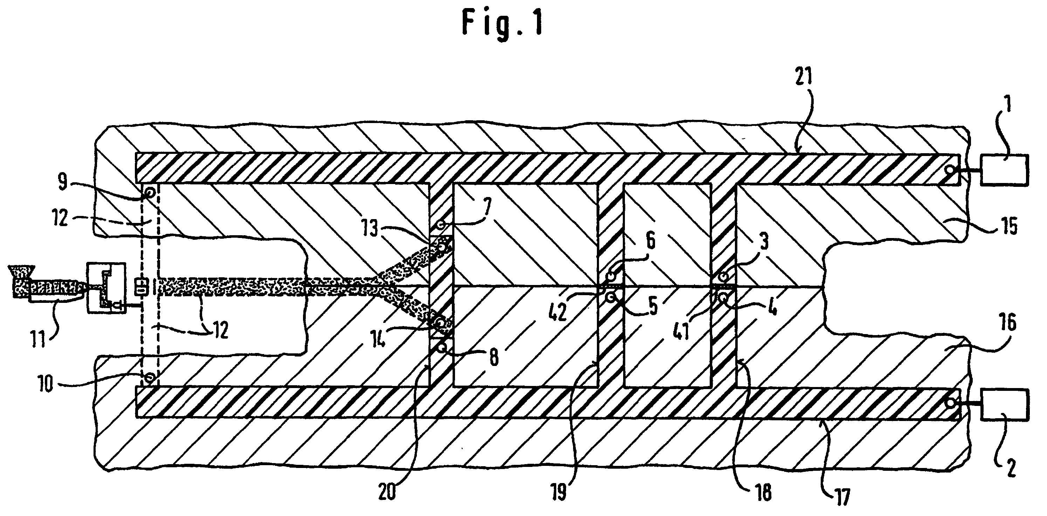

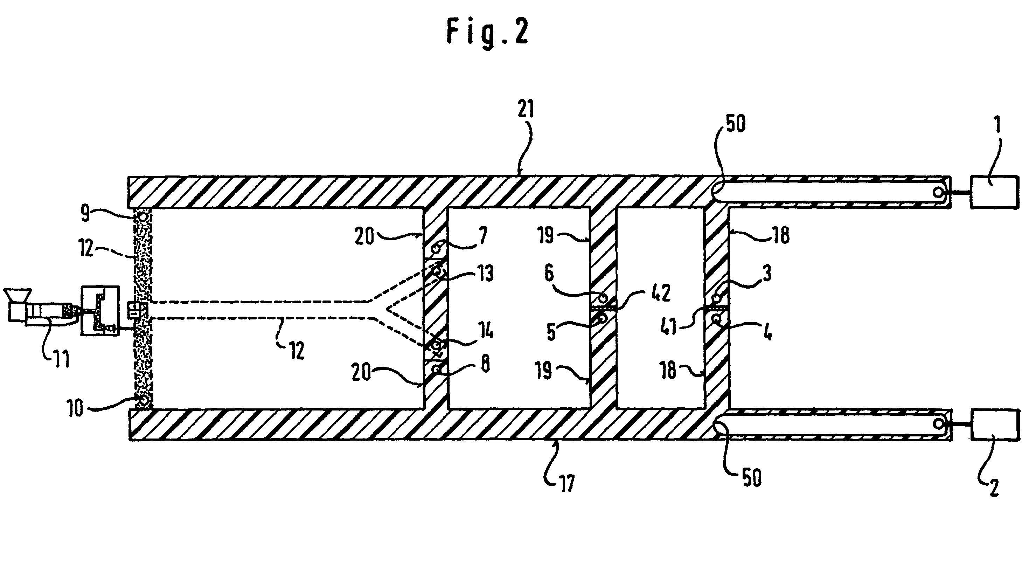

In der Fig. 1 ist eine schematische Querschnittsansicht durch ein Spritzgußwerkzeug gezeigt. Das hier schematisch dargestellte Werkzeug besteht aus einem mehrteiligen Werkzeug, von dem nur die Werkzeugteile 15 und 16 erkennbar sind. Diese Teile sind aus Übersichtlichkeitsgründen in den weiteren Fig. 2 bis 5 nicht mehr dargestellt. Durch die Werkzeugteile 15, 16 werden zwei sich längserstreckende Hauptformhohlräume 17, 21 und sich hierzu quererstreckende Nebenformhohlräume 18, 19, 20 gebildet, die im folgenden insgesamt als Formhohlraum bezeichnet sind. Die Hauptformhohlräume 17, 21 erstrecken sich in eine Längsrichtung und sind beabstandet voneinander angeordnet. Die Nebenformhohlräume 18, 19, 20 sind jeweils mit den Hauptformhohlräumen 17, 21 verbunden.

Eine Spritzgußmaschine 11 mit einer Plastifiziereinheit ist durch einen Heißkanalverteiler 12 jeweils mit einem Ende der Hauptformhohlräume 17, 21 verbunden. Des weiteren endet der Heißkanalverteiler 12 an einem ersten Nebenformhohlraum 20. An den Enden des Heißkanalverteilers 12 sind Heißkanaldüsen 9, 10, 13 und 14 angeordnet.

An den den Heißkanaldüsen 9, 10 gegenüberliegenden Enden der Hauptformhohlräume 17, 21 ist jeweils eine Gasinnendruckdüse 1, 2 angeordnet.

Im mittleren Bereich der Nebenformhohlräume 18, 19 sind Trennbleche 41, 42 angeordnet, welche die Nebenformhohlräume 18, 19 in zwei Hälften unterteilen, die jeweils mit einem Hauptformhohlraum 17, 21 verbunden sind. Auf jeder Seite der Trennbleche 41, 42 sind weitere Gasinnendruckdüsen 3, 4, 5, 6 angeordnet.

Bei dem ersten Nebenformhohlraum 20, in den der Heißkanalverteiler 12 endet, sind weitere Gasinnendruckdüsen 7, 8 angeordnet.

Im folgenden wird die Herstellung eines Formteiles, hier einer Mittelkonsole für ein Kraftfahrzeug, nach dem erfindungsgemäßen Verfahren näher beschrieben.

Mittels der Spritzgußmaschine 11 wird eine druckbeaufschlagte fließfähige Kunststoffschmelze durch das Heißkanalverteilersystem 12 in den durch das Werkzeug 15, 16 gebildeten Formhohlraum 17 bis 21 eingespeist. Dieser Vorgang erfolgt solange, bis der Formhohlraum 17 bis 21 vollständig mit Kunststoffschmelze gefüllt ist.

Nach Einsetzen des Erstarrens der Kunststoffschmelze an den Wänden des Formhohlraums 17 bis 21 wird gemäß der Fig. 2 in einem zweiten Verfahrensschritt durch die Gasinnendruckdüsen 1, 2 Stickstoff in die Hauptformhohlräume 17, 21 eingepresst, wodurch die schmelzflüssige Seele in den Hauptformhohlräumen 17, 21 in Richtung des Heißkanalverteilers 12 zurückgedrängt wird. Dieser Vorgang erfolgt solange, bis die durch das Zurückdrängen der schmelzflüssigen Seele in den Hauptformhohlräumen 17, 21 gebildeten Fließfronten 50 den ersten Nebenformhohlraum 18 erreichen. Während dieses Zurückdrängens der schmelzflüssigen Seele in den Hauptformhohlräumen 17, 21 wird das verdrängte Material über die Heißkanaldüsen 9, 10 in die Plastifiziereinheit zurückgedrängt.

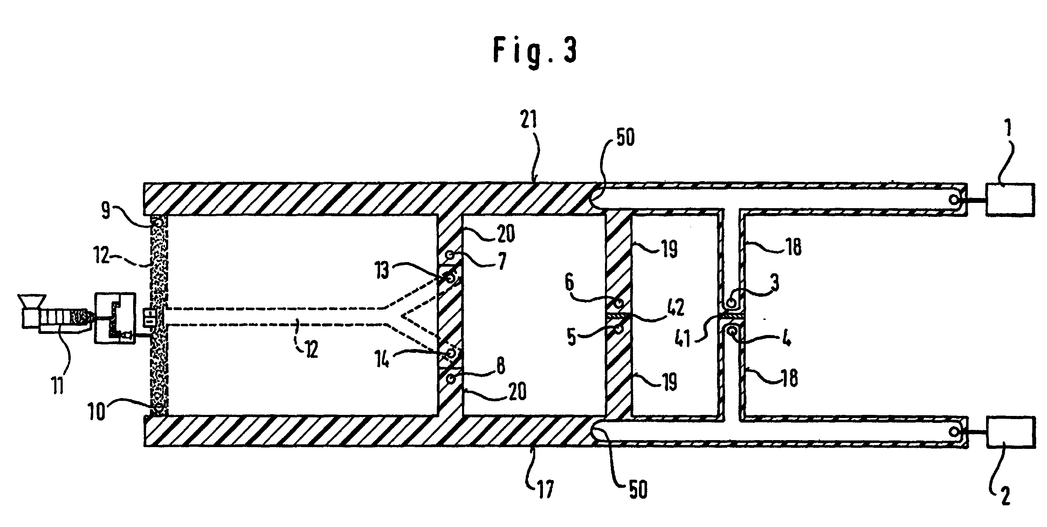

In einem dritten Verfahrensschritt, wie er in der Fig. 3 gezeigt ist, werden die Gasinnendruckdüsen 3, 4 zusätzlich mit Druck beaufschlagt, das heißt ein Fluid in die Teilbereiche des ersten Nebenformhohlraums 18 eingepresst, wodurch die schmelzflüssige Seele aus dem Nebenformhohlraum 18 in die Hauptformhohlräume 17, 21 verdrängt wird und dann gemeinsam in den Hauptformhohlräumen 17, 21 in Richtung der Heißkanaldüsen 9, 10 zurückgedrängt wird, wobei weiterhin das überschüssige Material in die Plastifiziereinheit zurückfließt.

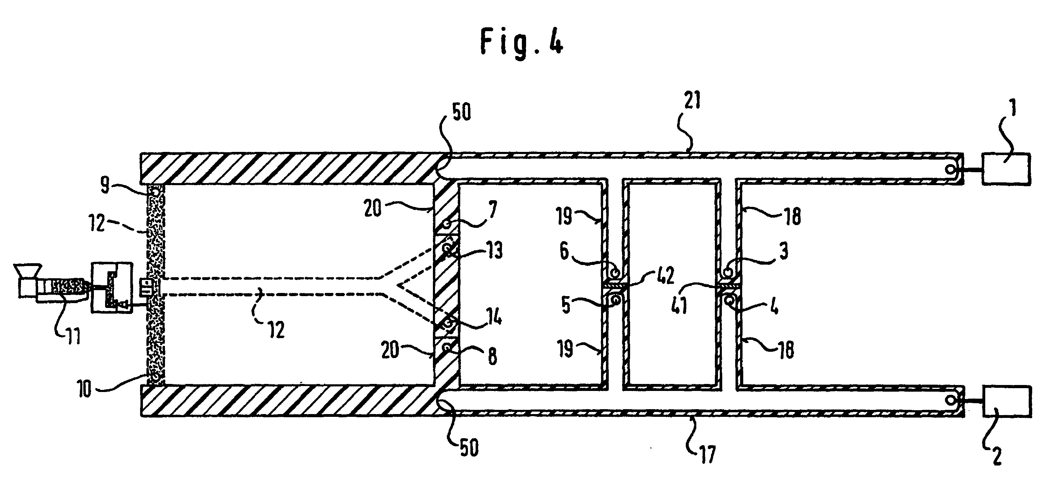

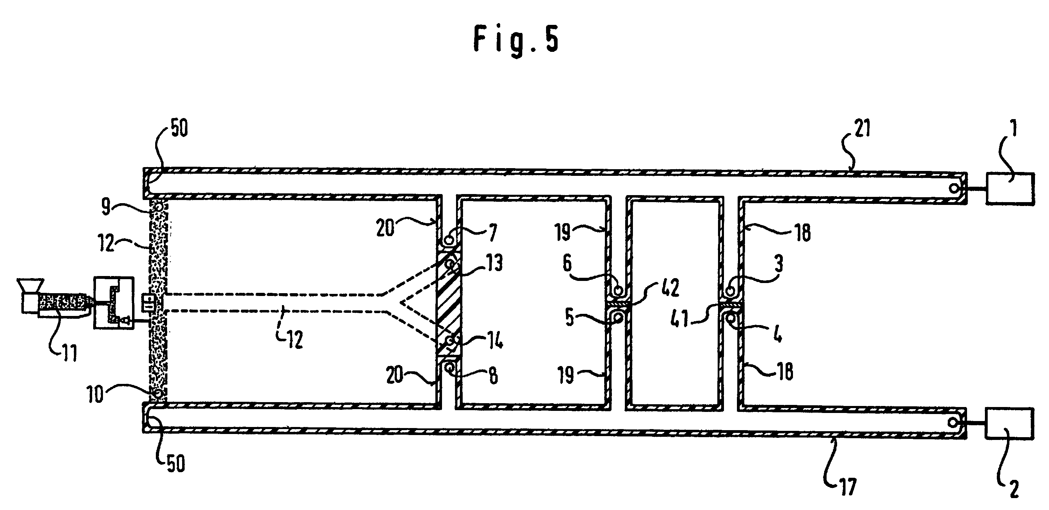

Dieser Vorgang wiederholt sich gemäß den Fig. 4 und 5, so daß auch die Nebenformhohlräume 19, 20 durch zeitlich nachgeordnetes Einpressen von Fluid in die Gasinnendruckdüsen 5 und 6 bzw. 7 und 8 hohlgeblasen werden. Diese Düsen 5 bis 8 werden also jeweils zusätzlich zu den Gasinnendruckdüsen 1 und 2 dann betrieben werden, wenn die Fließfronten 50 in den Hauptformhohlräumen 17, 21 die Verbindungsstellen der Nebenformhohlräume 19, 20 zu den Hauptformhohlräumen 17, 21 erreichen. Das überschüssige Material wird auch dabei jeweils in die Plastifiziereinheit zurückgedrängt.

Nachdem die Nebenformhohlräume 18, 19, 20 und Hauptformhohlräume 17, 21 vollständig hohlgeblasen sind, wirkt der Gasdruck über die auf diese Weise gebildeten Hohlräume im gesamten Formhohlraum des Formteiles als Nachdruck zum Schwindungsausgleich, bis das Formteil soweit abgekühlt ist und entformt werden kann. Vor der Entformung ist es allerdings notwendig, den Gasdruck im Formteilinneren abzubauen, das sonst beim öffnen des Werkzeuges der Hohlkörper aufplatzt. Dies kann durch eine geeignete Gasrückführung und/oder Druckentlastung in die Umgebung erfolgen. Die Druckentlastung bzw. Gasrückführung und das Entformen erfolgt in bekannter Art und Weise gemäß dem Stand der Technik.

## Patentansprüche

1. Verfahren zum Spritzgießen hohlgeblasener Kunststoffkörper, bei dem ein durch ein Werkzeug (15, 16) gebildeter, aus zumindest einem Haupt- (17, 21) und einem damit verbundenen Nebenformhohlraum (18, 19, 20) bestehender Formhohlraum (17 bis 21) vollständig mit einer druckbeaufschlagten fließfähigen Kunststoffschmelze gefüllt wird und nach Einsetzen des Erstarrens der Kunststoffschmelze an den Wänden des Formhohlraumes in den Hauptformhohlraum (17, 21) ein druckbeaufschlagtes Fluid eingebracht wird, wodurch die fließfähige Seele in dem Hauptformhohlraum (17, 21) unter Bildung einer Fließfront (50) verdrängt wird und dann, sobald die Fließfront (50) die Verbindungsstelle zum Nebenformhohlraum (18, 19, 20) erreicht hat, zusätzlich ein druckbeaufschlagtes Fluid an der der Verbindungsstelle abgewandten Seite in dem Nebenformhohlraum (18, 19, 20) eingebracht wird, so dass die schmelzflüssige Seele in dem Nebenformhohlraum (18, 19, 20) zusammen mit der schmelzflüssigen Seele in dem Hauptformhohlraum (17, 21) ausgetrieben wird.

2. Verfahren nach Anspruch 1, **dadurch gekennzeichnet, dass** in Richtung der in dem Hauptformhohlraum (17, 21) wandernden Fließfront (50) betrachtet, mehrere Nebenformhohlräume (18, 19, 20) in den Hauptformhohlraum (17, 21) einmünden und ein druckbeaufschlagtes Fluid jeweils dann zusätzlich in den jeweiligen Nebenformhohlraum (18, 19, 20) eingebracht wird, sobald die Fließfront (50) im Hauptformhohlraum (17, 21) die jeweilige Verbindungsstelle zum jeweiligen Nebenformhohlraum (18, 19, 20) erreicht hat.

3. Verfahren nach einem der vorhergehenden Ansprüche, **dadurch gekennzeichnet, dass** das durch das Einbringen des Fluids verdrängte Material in eine Plastifiziereinheit einer Spritzgießmaschine (11) zurückgedrängt wird.

4. Verfahren nach Anspruch 1 oder 2, **dadurch gekennzeichnet, dass** das durch das Einbringen eines Fluids verdrängte Material in eine entformbare Nebenkavität ausgetrieben wird.

5. Vorrichtung zur Durchführung des Verfahrens nach Anspruch 1, wobei
- in einem Werkzeug (15, 16) zumindest ein Hauptformhohlraum (17, 21) und zumindest ein Nebenformhohlraum (18, 19, 20) gebildet ist, die miteinander in Verbindung stehen,
- eine Spritzgussmaschine an einem Ende des Hauptformhohlraums (17, 21) angeordnet ist, durch die eine druckbeaufschlagte fließfähige Kunststoffschmelze in den Formhohlraum einbringbar ist und an dem Hauptformhohlraum (17, 21) zumindest eine Düse (1, 2) zum Einbringen eines druckbeaufschlagten Fluids angeordnet ist, und
- an den den Verbindungsstellen entgegengesetzten Enden der Nebenformhohlräume (18, 19, 20) zumindest eine weitere Düse (3, 4, 5, 6, 7, 8) zum Einbringen eines druckbeaufschlagten Fluids angeordnet ist, wobei diese Düse dann zusätzlich mit Druck beaufschlagt wird, wenn die Fließfront (50) der fließfähigen Seele in dem Hauptformhohlraum (17, 21) die Verbindungsstelle des Nebenformhohlraums (18, 19, 20) zu dem Hauptformhohlraum (17, 21) erreicht,
**dadurch gekennzeichnet, dass**
in dem Werkzeug (15, 16) mehrere, sich in einer Längsrichtung erstreckende Hauptformhohlräume (17, 21) und hierzu in einem Winkel angeordnete Nebenformhohlräume (18, 19, 20) gebildet sind.

6. Vorrichtung nach Anspruch 4 oder 5, **dadurch gekennzeichnet, dass** in Längsrichtung gesehen im mittleren Bereich der Nebenformhohlräume (18, 19) Trennbleche (41, 42) angeordnet sind, die die Nebenformhohlräume (18, 19, 20) unterteilen.

7. Vorrichtung nach Anspruch 6, **dadurch gekennzeichnet, dass** auf jeder Seite des Trennblechs (41, 42), die in Richtung des Hauptformhohlraums (17, 21) zeigt, eine Düse (3 bis 6) zum Einbringen eines druckbeaufschlagten Fluids angeordnet ist.

## Claims

1. Method for the injection moulding of hollow-blown plastic bodies, in which a mould cavity (17 to 21) formed by a tool (15, 16) and consisting of at least one main mould cavity (17, 21) and an ancillary mould cavity (18, 19, 20) connected thereto is completely filled with a pressurised free-flowing plastic melt and, after commencement of solidification of the plastic melt on the walls of the mould cavity, a pressurised fluid is introduced into the main mould cavity (17, 21), with the result that the free-flowing core in the main mould cavity (17, 21) is displaced, forming a flow front (50), and then, as soon as the flow front (50) has reached the junction with the ancillary mould cavity (18, 19, 20), in addition a pressurised fluid is introduced in the ancillary mould cavity (18, 19, 20) on the side facing away from the junction, so that the molten core in the ancillary mould cavity (18, 19, 20) together with the molten core in the main mould cavity (17, 21) is expelled.

2. Method according to claim 1, **characterised in that**, seen in the direction of the flow front (50) which migrates in the main mould cavity (17, 21), several ancillary mould cavities (18, 19, 20) lead into the main mould cavity (17, 21), and a pressurised fluid is then additionally introduced into the respective ancillary mould cavity (18, 19, 20) each time as soon as the flow front (50) in the main mould cavity (17, 21) has reached the respective junction with the respective ancillary mould cavity (18, 19, 20).

3. Method according to any of the preceding claims, **characterised in that** the material displaced by the introduction of the fluid is forced back into a plasticising unit of an injection moulding machine (11).

4. Method according to claim 1 or 2, **characterised in that** the material displaced by the introduction of a fluid is expelled into an ancillary cavity which can be removed from the mould.

5. Apparatus for carrying out the method according to claim 1, wherein
- in a tool (15, 16) are formed at least one main mould cavity (17, 21) and at least one ancillary mould cavity (18, 19, 20) which are connected to each other,
- an injection moulding machine is arranged at one end of the main mould cavity (17, 21), by which machine a pressurised free-flowing plastic melt can be introduced into the mould cavity, and on the main mould cavity (17, 21) is arranged at least one nozzle (1, 2) for the introduction of a pressurised fluid, and
- at the ends of the ancillary mould cavities (18, 19, 20) opposite the junctions is arranged at least one further nozzle (3, 4, 5, 6, 7, 8) for introducing a pressurised fluid, wherein this nozzle is additionally pressurised when the flow front (50) of the free-flowing core in the main mould cavity (17, 21) reaches the junction of the ancillary mould cavity (18, 19, 20) with the main mould cavity (17, 21),
**characterised in that** in the tool (15, 16) are formed several main mould cavities (17, 21) extending in a longitudinal direction and ancillary mould cavities (18, 19, 20) arranged at an angle thereto.

6. Apparatus according to claim 4 or 5, **characterised in that**, seen in the longitudinal direction, in the central region of the ancillary mould cavities (18, 19) are arranged divider plates (41, 42) which divide the ancillary mould cavities (18, 19, 20).

7. Apparatus according to claim 6, **characterised in that** on each side of the divider plate (41, 42) which points in the direction of the main mould cavity (17, 21) is arranged a nozzle (3 to 6) for the introduction of a pressurised fluid.

## Revendications

1. Procédé de coulée par injection de corps creux soufflés en matière plastique, dans lequel on remplit complètement une cavité de moulage (17 à 21), formée par un outil (15, 16) et constituée par au moins une cavité de moulage principale (17, 21) et par une cavité de moulage secondaire (18, 19, 20) reliée à celle-ci, avec une matière plastique en fusion capable de couler et mise sous pression, et après commencement de la solidification de la matière plastique en fusion au niveau des parois de la cavité de moulage, on introduit dans la cavité de moulage principale (17, 21) un fluide mis sous pression, grâce à quoi l'âme capable de couler est refoulée dans la cavité de moulage principale (17, 21) en formant un front d'écoulement (50), et ensuite, dès que le front d'écoulement (50) a atteint l'emplacement de liaison avec la cavité de moulage secondaire (18, 19, 20), on introduit dans la cavité de moulage secondaire (18, 19, 20) en supplément un fluide mis sous pression sur le côté détourné de l'emplacement de liaison, de sorte que l'âme liquide en fusion est chassée dans la cavité de moulage secondaire (18, 19, 20) conjointement avec l'âme liquide en fusion dans la cavité de moulage principale (17, 21).

2. Procédé selon la revendication 1, **caractérisé en ce que** plusieurs cavités de moulage secondaires (18, 19, 20) débouchent dans la cavité de moulage principale (17, 21), vues en direction du front d'écoulement (50) en déplacement dans la cavité de moulage principale (17, 21), et on introduit alors en supplément un fluide mis sous pression dans la cavité de moulage secondaire respective (18, 19, 20), dès que le front d'écoulement (50) dans la cavité de moulage principale (17, 21) a atteint l'emplacement de liaison respectif vers la cavité de moulage secondaire respective (18, 19, 20).

3. Procédé selon l'une des revendications précédentes, **caractérisé en ce que** le matériau refoulé par introduction du fluide est refoulé jusque dans une unité de plastification d'une machine de coulée par injection (11).

4. Procédé selon l'une ou l'autre des revendications 1 et 2, **caractérisé en ce que** le matériau refoulé par introduction du fluide est chassé jusque dans un creux secondaire susceptible d'être démoulé.

5. Dispositif pour mettre en oeuvre le procédé selon la revendication 1, dans lequel :
- au moins une cavité de moulage principale (17, 21) et au moins une cavité de moulage secondaire (18, 19, 20) sont formées dans un outil (15, 16) et communiquent l'une avec l'autre,
- une machine de coulée par injection est agencée à une extrémité de la cavité de moulage principale (17, 21), par laquelle une matière plastique en fusion mise sous pression et capable de couler peut être introduite dans la cavité de moulage, et au moins une buse (1, 2) pour introduire un fluide mis sous pression est agencée sur la cavité de moulage principale (17, 21), et
- aux extrémités, opposées aux emplacements de liaison, des cavités de moulage secondaires (18, 19, 20), au moins une autre buse (3, 4, 5, 6, 7, 8) est agencée pour introduire un fluide mis sous pression, cette buse étant alors alimentée en supplément en pression lorsque le front d'écoulement (50) de l'âme capable de couler dans la cavité de moulage principale (17, 21) a atteint l'emplacement de liaison de la cavité de moulage secondaire (18, 19, 20) avec la cavité de moulage principale (17, 21),
**caractérisé en ce que**
plusieurs cavités de moulage principales (17, 21) s'étendant en direction longitudinale et des cavités de moulage secondaires (18, 19, 20) s'étendant sous un angle par rapport à celles-ci sont formées dans l'outil (15, 16).

6. Dispositif selon l'une ou l'autre des revendications 4 et 5, **caractérisé en ce que**, dans la zone médiane des cavités de moulage secondaires (18, 19), vue en direction longitudinale, des tôles de séparation (41, 42) sont prévues pour subdiviser les cavités de moulage secondaires (18, 19, 20).

7. Dispositif selon la revendication 6, **caractérisé en ce que** sur chaque côté de la tôle de séparation (41, 42), lequel est dirigé en direction de la cavité de moulage principale (17, 21), il est prévu une buse (3 à 6) pour introduire un fluide mis sous pression.
